# EUROPÄISCHE PATENTANMELDUNG

(11) **EP 1 418 141 A1**
(43) Veröffentlichungstag der Anmeldung: **12.05.2004**
(21) Anmeldenummer: 02024876.1
(22) Anmeldetag: 08.11.2002
(51) Int. Cl.: B65G 69/24, B64F 1/32

(54) **Flugzeugbeladevorrichtung sowie deren Verwendung**

(71) Anmelder: Trepel Airport Equipment GmbH, 97941 Tauberbischofsheim (DE)
(72) Erfinder: Arijoki, Seppo, 35510 Butzbach (DE); Hörner, Fred, 97877 Wertheim (DE); Reymann, Gottfried, 65191 Wiesbaden (DE)
(74) Vertreter: Quermann, Helmut, Dipl.-Ing.

(57) **Zusammenfassung**

Die Erfindung betrifft eine Flugzeugbeladevorrichtung (24) mit heb- und senkbarer Ladeplattform (31) zur Aufnahme von Gut (7). Sie weist Mittel (38) zum Heben und Senken der Ladeplattform auf, wobei diese in einer Position verfahrbar ist, in der die obere Fläche der Ladeplattform eine Ebene mit der Ladeebene (4) des Flugzeugs (2) bildet.

Erfindungsgemäß ist eine Übergabebrücke (43) zum Übergeben des Ladegutes von der Ladeplattform in das Flugzeug und umgekehrt vorgesehen, wobei die Übergabebrücke in einem vertikal angeordneten, teleskopierbaren Hubgerüst (44) gelagert ist, sowie Mittel (45) zum Aus- und Einfahren des Hubgerüsts vorgesehen sind.

Eine solche Flugzeugbeladevorrichtung findet insbesondere bei übergroßen Flugzeugen Verwendung, vorzugsweise bei solchen, die zwei Ladeebenen übereinander aufweisen.

## Beschreibung

Die Erfindung betrifft eine Flugzeugbeladevorrichtung mit mindestens einer hebund senkbaren Ladeplattform zur Aufnahme des zu be- bzw. entladenden Gutes, mit Mitteln zum Heben und Senken der Ladeplattform, wobei die Ladeplattform in eine Position verfahrbar ist, in der die obere Fläche der Ladeplattform eine Ebene mit einer Ladeebene des Flugzeuges bildet. Die Erfindung betrifft ferner eine besondere Verwendung einer Flugzeugbeladevorrichtung.

Eine Flugzeugbeladevorrichtung der eingangs genannten Art ist beispielsweise aus der DE 37 30 415 C2 bekannt. Sie ist verfahrbar ausgebildet und weist einen Rahmen, eine relativ zum Rahmen vertikal verfahrbare, hintere Ladeplattform - Hauptplattform - und eine relativ zum Rahmen vertikal verfahrbare, an das Flugzeug andockbare, vordere Ladeplattform - Frontplattform - auf. Kraftmittel dienen dem unabhängigen Heben und Senken der beiden Ladeplattformen, wobei die obere Fläche der jeweiligen Ladeplattform der Aufnahme zu be- bzw. entladenden Gutes dient.

Jede Ladeplattform ist von Scheren getragen. Für das Scherenpaar der vorderen Trageplattform ist zusätzlich ein Aushubzylinder vorgesehen, der an dem die Enden des Scherenpaares verbindenden Joch angreift. Die hintere Ladeplattform wird mittels zweier Ketten angehoben, die im Bereich von Rollen umgelenkt werden, die mittels vertikal angeordneter Hydraulikzylinder heb- und senkbar sind.

Bei dieser Flugzeugbeladevorrichtung haben die Scheren für die jeweilige Plattform sowohl tragende Funktion als auch Führungsfunktion. Das Konstruktionsprinzip der Scheren bedingt eine maximale Förderhöhe der Ladeplattformen, die für besonders große Flugzeuge mit entsprechend hoch liegender Ladeebene nicht ausreicht. Bei solchen Flugzeugen befindet sich das Ladeniveau durchaus ca. 8 m oder mehr oberhalb der Fahrfläche des Flugzeuges bzw. der Flugzeugbeladevorrichtung.

Bei der beschriebenen Flugzeugbeladevorrichtung erfolgt das Beladen des Flugzeuges, indem die vordere Ladeplattform auf das Ladeniveau des Flugzeuges angehoben wird und dort verbleibt. Das Ladegut wird auf die abgesenkte hintere Ladeplattform geschoben und dann angehoben. Befindet sich die hintere Ladeplattform auf demselben Niveau wie die vordere Ladeplatte, wird das Ladegut über die vordere Ladeplattform in das Flugzeug geschoben. Das maximale Hubniveau der hinteren Ladeplattform und der vorderen Ladeplattform ist damit gleich.

Bei angehobener vorderer Ladeplattform wird diese an das Flugzeug in einem Rumpfbereich des Flugzeuges angedockt, der deutlich unterhalb der, horizontal gemessen, maximalen Rumpfdicke des Flugzeuges ist. Die vordere Ladeplattform verbleibt beim Be- bzw. Entladen des Flugzeuges in dieser Stellung.

Eine ähnliche Flugzeugbeladevorrichtung ist aus der US 3,993,207 bekannt.

Aufgabe der Erfindung ist es, eine Flugzeugbeladevorrichtung anzugeben, die es ermöglicht, Flugzeuge mit sehr hohem Ladeniveau einfach und schnell zu be- bzw. entladen, und dies bei baulich optimaler Gestaltung der Flugzeugbeladevorrichtung. Eine besondere Verwendung der Vorrichtung bezieht sich auf das Be- und Entladen eines großen Flugzeuges mit mindestens zwei übereinanderliegenden Ladeebenen.

Gelöst wird die Aufgabe bei einer Flugzeugbeladevorrichtung der eingangs genannten Art dadurch, dass eine Übergabebrücke zum Übergeben des Ladegutes von der Ladeplattform in das Flugzeug und umgekehrt vorgesehen ist, wobei die Übergabebrücke in einem vertikal angeordneten teleskopierbaren Hubgerüst gelagert ist, sowie Mittel zum Aus- und Einfahren des Hubgerüsts vorgesehen sind.

Mittels der erfindungsgemäßen Flugzeugbeladevorrichtung kann ein besonders großes Flugzeug beladen werden, beispielsweise ein Flugzeug des Typs Airbus A 380, bei dem sich die obere Ladeebene etwa auf einer Höhe von ca. 8,20 m oberhalb des Bodens des Flughafenvorfeldes und hiermit oberhalb der maximalen Rumpfdicke des Flugzeuges befindet, während die untere Ladeebene wesentlich tiefer angeordnet ist, zumindest unterhalb der maximalen Rumpfdicke des Flugzeuges. Die Ausbildung der Flugzeugbeladevorrichtung mit der in einem teleskopierbaren Hubgerüst gelagerten Übergabebrücke gestattet es, unkompliziert die Übergabebrücke bis auf das hohe Niveau - ca. 8,20 m - anzuheben, wobei die Übergabebrücke mit recht geringem Bauraum, bezogen auf die Laderichtung des Gutes beim Überführen in das Flugzeug auskommt. Die Nachteile einer Scherenlösung mit erheblichem Bauraum und reduzierter Hubhöhe sind damit nachhaltig eliminiert. Das Hubgerüst weist vorzugsweise zwei teleskopierbare Hubeinheiten auf. Es ist genauso denkbar, mehrere teleskopierbare Hubeinheiten vorzusehen.

Die teleskopierbare Ausbildung des Hubgerüstes gestattet es, einfach und schnell die Flugzeugbeladevorrichtung von dem einen Ladeniveau des Flugzeuges auf dessen anderes Ladeniveau zu verfahren.

In diesem Zusammenhang sieht eine besondere Weiterbildung der Erfindung vor, dass das Hubgerüst benachbart der Ladeplattform angeordnet ist und die Übergabebrücke im Bereich ihres der Ladeplattform zugewandten Endes aufnimmt. Die Übergabebrücke kragt somit von der Ladeplattform aus. Insbesondere diese Gestaltung ermöglicht es, die Übergabebrücke so auszubilden, dass sie, im Bereich ihres der Ladeplattform abgewandten Endes, eine mittels Kraftmitteln horizontal ein- und ausfahrbare Überfahrlippe aufweist. Diese Längenveränderlichkeit der Übergabebrücke gestattet es insbesondere, schnelle Positionswechsel der Flugzeugbeladevorrichtung zwischen den beiden Ladeebenen des Flugzeuges herbeizuführen. So wird die Überfahrlippe geringfügig eingefahren, damit sie beim Absenken bzw. Anheben der Übergabebrücke die Außenhaut des Flugzeuges im Bereich dessen maximaler Rumpfdicke nicht berührt und damit beschädigt. Ist dieser Bereich passiert, kann die Überfahrlippe wieder ausgefahren und die Übergabebrücke im Bereich der angefahrenen Ladeebene an das Flugzeug angedockt werden.

Um Verlagerungen der jeweiligen Ladeebene des Flugzeuges beim Be- bzw. Entladen des Flugzeuges im Sinne von einem geringfügigen Schrägstellen der Ladeebene in den unterschiedlichsten Richtungen ausgleichen zu können, sollte die Übergabebrücke aus der Horizontalen zur Seite neigbar und/oder aus der Horizontalen nach vorne unten oder vorne oben neigbar sein. Zum Neigen der Überfahrbrücke sind Kraftmittel, insbesondere Hydraulikzylinder vorgesehen. Diese greifen zweckmäßig einerseits an der eigentlichen Übergabebrücke, andererseits an einem Lagerelement für die Übergabebrücke an, dass im Hubgerüst gelagert ist.

Es ist durchaus denkbar, dass bei der erfindungsgemäßen Flugzeugbeladevorrichtung die beschriebene heb- und senkbare Ladeplattform nicht die einzige Ladeplattform ist, sondern hinter dieser eine weitere hintere Ladeplattform vorgesehen ist. Alternativ kann diese hintere Ladeplattform Bestandteil einer weiteren Flugzeugbeladevorrichtung sein, so dass der erfindungsgemäßen Flugzeugbeladevorrichtung die Funktion eines Adapterteils zwischen der weiteren Flugzeugbeladevorrichtung und dem Flugzeug zukommt. Die vordere Ladeplattform hat in diesen Fällen nicht die Funktion, den gesamten Förderweg des Ladegutes, ausgehend benachbart dem Boden des Flughafenvorfeldes bis zur maximalen Höhe, zu überbrücken, sondern nur ab einem mittleren Hubniveau bis zur maximalen Hubhöhe. Ausgehend vom angehobenen Niveau der hinteren Ladeplattform wird das Ladegut mittels der vorderen Ladeplattform um eine Höhe, die 50 % bis 100 % der Höhe beträgt, die das Ladegut mittels der hinteren Ladeplattform angehoben wird, gehoben.

Ist ein besonders großes Flugzeug zu beladen, beispielsweise das Flugzeug des Typs Airbus A380, kann bei abgesenkter Stellung der vorderen Ladeplattform die untere Ladeebene des Flugzeugs, bei angehobener Stellung der vorderen Ladeplattform die obere Ladeebene des Flugzeugs bedient werden. Des Weiteren kann bei vollständig oder weitgehend abgesenkter hinterer Ladeplattform die Ladeebene eines kleineren Flugzeuges, beispielsweise des Typs Airbus A300, A310, A340 oder Boing B747 bedient werden. Konkret bedeutet dies, dass das Ladegut mittels der hinteren Ladeplattform, ausgehend von einem Niveau in Bodennähe, beispielsweise 520 mm über dem Boden, bis zu ca. 6 m über dem Boden und mittels der vorderen Ladeplattform zwischen ca. 4 und 8,50 m über dem Boden anhebbar ist. In dem Hubbereich der vorderen Ladeplattform ist entsprechend die Übergabebrücke heb- und senkbar.

Weitere Merkmale der Erfindung sind in den Unteransprüchen, der Beschreibung der Figuren und den Figuren selbst dargestellt, wobei bemerkt wird, dass alle Einzelmerkmale und alle Kombinationen von Einzelmerkmalen weitere erfinderische Ausgestaltungen darstellen.

In den Figuren ist die Erfindung schematisch anhand zweier Ausführungsbeispiele erläutert, ohne hierauf beschränkt zu sein. Es zeigt:
- Figur 1: den Beladevorgang eines Flugzeugs unter Verwendung einer herkömmlichen verfahrbaren Flugzeugbeladevorrichtung und einer die Funktion eines Adapters zwischen dieser und dem Flugzeug darstellenden erfindungsgemäßen Flugzeugbeladevorrichtung, die gleichfalls verfahrbar ist, in einer Seitenansicht,
- Figur 2: eine Ansicht II gemäß Figur 1 der die Adapterfunktion aufweisenden Flugzeugbeladevorrichtung,
- Figur 3: einen Beladevorgang eines Flugzeugs unter Verwendung einer erfindungsgemäßen Flugzeugbeladevorrichtung, die eine dem Flugzeug zugewandte Flugzeugbeladevorrichtung und eine dem Flugzeug abgewandte Beladevorrichtung aufweist, von der Seite gesehen,
- Figur 4: eine Ansicht IV gemäß Figur 3 der Flugzeugbeladevorrichtung,
- Figur 5: eine gegenüber den Ausführungsformen nach den Figuren 1 bis 4 modifizierte Gestaltung der Übergabebrücke, welche seitlich geneigt werden kann, in einer Ansicht II bzw. IV gemäß der Figuren 2 und 4,
- Figur 6: eine Ansicht VI gemäß Figur 5, wobei neben der im Wesentlichen abgesenkten Stellung der Übergabebrücke deren vollständig angehobene Stellung mit veranschaulicht ist.

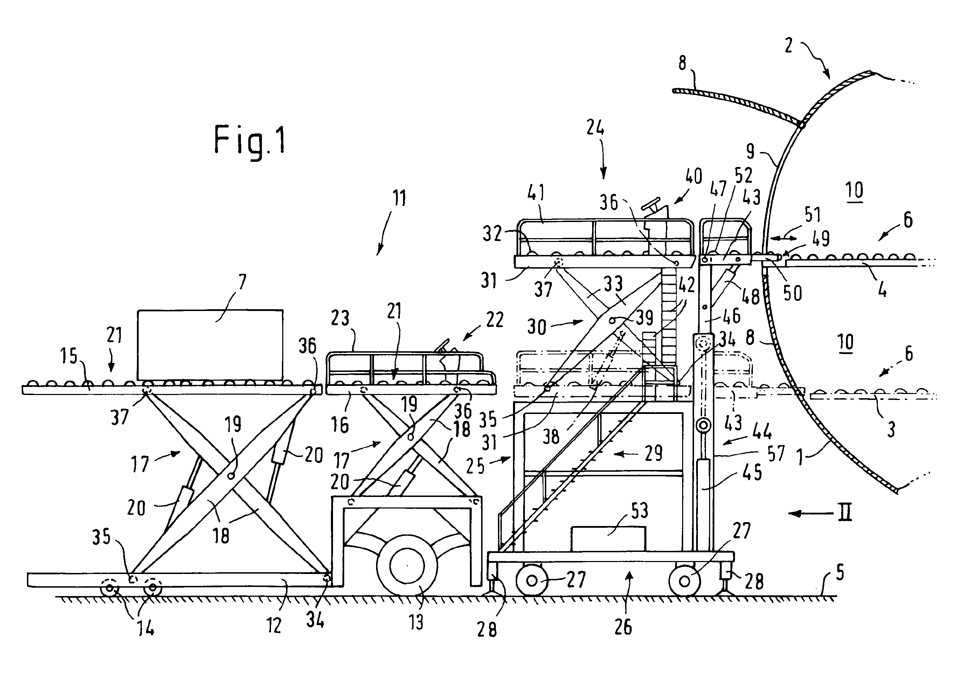

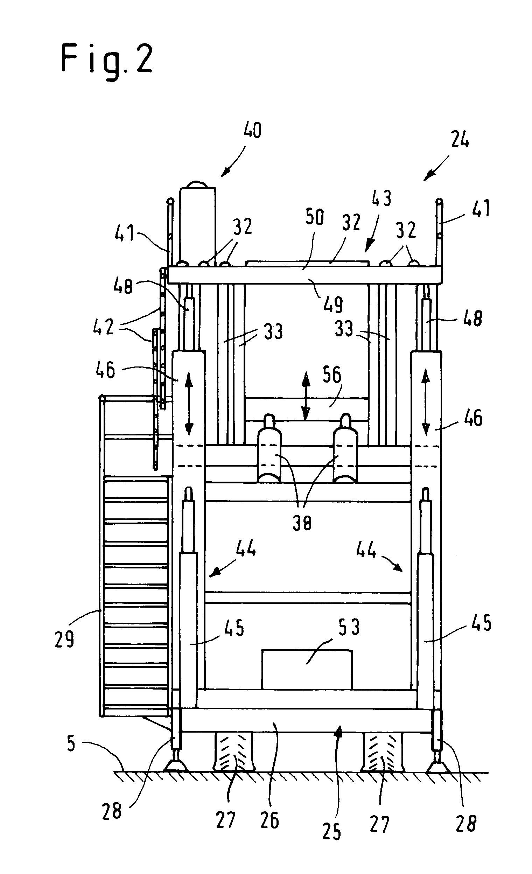

Bei der nachfolgenden Beschreibung wird zunächst auf die Darstellung der Figuren 1 und 2 Bezug genommen:

Gezeigt ist der Rumpf 1 eines Flugzeugs 2, bei dem es sich insbesondere um ein Flugzeug des Typs Airbus A380 handelt. Dieses Flugzeug weist eine untere Ladeebene 3, sowie eine darüber befindliche, obere Ladeebene 4 auf. Die obere Ladeebene befindet sich etwa auf einer Höhe von 8,20 m oberhalb des Bodens 5 des Flughafenvorfeldes. In den Ladeebenen 3 und 4 sind Fördersysteme in Art von Rollenbahnen 6 zugeordnet, mit Hilfe derer es möglich ist, Ladegut, bei dem es sich insbesondere um kastenförmige Behälter 7 handelt, durch die mittels der Ladeluke 8 verschließbare Ladeöffnung 9 in das Flugzeuginnere 10 zu verbringen.

Dem Verladen des Ladegutes 9 dient zunächst eine verfahrbare Flugzeugbeladevorrichtung 11, die in herkömmlicher Art und Weise gestaltet ist. Mit dieser Flugzeugbeladevorrichtung können üblicherweise Flugzeuge be- und entladen werden, deren Ladeebene zwischen 4,30 m und 5,60 m oberhalb des Bodens 5 liegt. Es handelt sich hierbei z. B. um Flugzeuge der Typen Airbus A300, DC10, MD11 oder Boeing B747.

Die Flugzeugbeladevorrichtung 11 weist einen Rahmen 12 auf, der ein nicht veranschaulichtes Fahrgestell trägt, das der Aufnahme von lenkbaren Vorderrädern 13, ferner der Aufnahme von Hinterrädern 14 dient. Der Rahmen 12 ist gekröpft ausgebildet, so dass er der Aufnahme einer hinteren, größeren Ladeplattform 15 und einer vorderen, kleineren Ladeplattform 16 dient. Jede Ladeplattform 15 bzw. 16 ist von einem Scherenpaar 17 getragen, wobei die beiden Scheren ein nicht näher gezeigtes Joch verbindet. Der Drehpunkt der Scherenarme 18 ist mit der Bezugsziffer 19 bezeichnet. An den die Scherenarme 18 verbindenden Jochen greifen Hydraulikzylinder 20 an, die entweder ausschließlich im Scherensystem gelagert sind, wie zur Ladeplattform 15 veranschaulicht, oder aber zwischen dem Scherensystem und dem Rahmen 12 wirken, wie zur Ladeplattform 16 verdeutlicht. Die Hydraulikzylinder 20 dienen dem Heben der Ladeplattformen 15 und 16, darüber hinaus dem geregelten Absenken dieser Ladeplattformen. In die Ladeplattformen 15 und 16 sind Fördersysteme in Form von Rollenbahnen 21 integriert. Da auf der Ladeplattform 16 der eigenständigen Flugzeugbeladevorrichtung 11 gearbeitet wird, ist diese mit einem Steuerstand 22 und seitlichen Geländern 23 versehen.

In der Figur 1 ist auf der Rollenbahn 21 der hinteren Ladeplattform 15 ruhendes Ladegut 7 veranschaulicht, dass als quaderförmiger Behälter ausgebildet ist. Bei diesem handelt es sich um einen üblichen kastenförmigen Ladegutbehälter, der bei Flugzeugen Verwendung findet.

Figur 1 veranschaulicht für diese Flugzeugbeladevorrichtung 1 deren maximal angehobene Stellung von Ladeplattform 15 und Ladeplattform 16, die eine Ladeebene bilden. In dieser maximal angehobenen Stellung der Ladeplattformen 15 und 16 befinden sich diese auf einem Niveau von etwa 5,60 m über dem Boden 5, so dass mit dieser verfahrbaren Flugzeugbeladevorrichtung 11 maximal Flugzeuge des Typs Boeing B747 beladen werden können. In der maximal abgesenkten Stellung von Ladeplattform 15 bzw. 16 sind diese benachbart den dieser zugewandten parallelen Abschnitten des Rahmens 12 angeordnet. Die Ladeplattform 15 befindet sich somit knapp oberhalb des Bodens 5, konkret befindet sich die Aufnahmeebene der Rollenbahn 21 etwa 520 mm über dem Boden 5. Die Ladeplattform 16 befindet sich in deren abgesenkten Stellung höher, nämlich oberhalb des Radkastens der lenkbaren Vorderräder 13 der fahrbaren Flugzeugbeladevorrichtung 11.

Zwischen dieser Flugzeugbeladevorrichtung 11 und dem Flugzeug 2 befindet sich die, die Funktion eines Adapters aufweisende fahrbare Flugzeugbeladevorrichtung 24. Diese besitzt einen erhöhten Rahmen 25 mit in diesem gelagerten

Fahrgestell 26, das der Aufnahme von vier lenkbaren und antreibbaren Rädern 27 dient, die im Bereich der Ecken des Rahmens angeordnet sind. In diesen Ecken ferner angeordnete ausfahrbare Stützelemente 28 dienen, bei Entlastung der Räder 27, der stabilen Lagerung der Flugzeugbeladevorrichtung 24 auf dem Boden 5. Seitlich des Rahmens 25 ist eine Leiter 29 angeordnet. Der Rahmen 25 nimmt im Bereich seiner oberen, horizontalen Fläche ein Scherenpaar 30 auf, in dem eine Ladeplattform 31 gelagert ist. Auch diese ist auf ihrer Oberseite mit Rollenbahnen 32 versehen. Die Scherenarme des Scherenpaars 30 sind mit der Bezugsziffer 33 bezeichnet, der Scherenmittelpunkt mit der Bezugsziffer 39. Dieses Scherenpaar 30 ist in Art der Scherenpaare 17 der Flugzeugbeladevorrichtung 11 gelagert, somit in einem rahmenseitigen Festende 34, einem rahmenseitigen Losende 35, einem ladeplattformseitigen Festende 36 und einem ladeplattformseitigen Losende 37. Entsprechend den Hydraulikzylindern 20 bei der Ladeplattform 16 sind zwei Hydraulikzylinder 38 bei der Ladeplattform 31 vorgesehen, die somit einerseits im Rahmen 25, andererseits im Joch 56 gelagert sind, dass die Scherenarme 33 des Scherenpaars 30 im Bereich zwischen den Festenden 34 und dem Scherenmittelpunkt 39, benachbart dem Scherenmittelpunkt verbindet.

Die Ladeplattform 31 ist mit einem Steuerstand 40 und einem Geländer 41 versehen. Um die angehobene Ladeplattform 31 erkennen bzw. verlassen zu können, ist eine Leiteranordnung 42 vorgesehen, die zur Leiter 29 führt.

Auf der dem Flugzeug 2 zugewandten Seite, weist die Flugzeugladevorrichtung 24 eine relativ zum Rahmen 25 vertikal verfahrbare, an das Flugzeug 2 andockbare Übergabebrücke 43 auf. Diese dient dem Zweck, das Ladegut 7 definiert von der Ladeplattform 31 zur Ladeebene des Flugzeugs 2 übergeben zu können bzw. vom Flugzeug 2 auf die Flugzeugbeladevorrichtung 24 übernehmen zu können. Die Erstreckung der Übergabebrücke 43 in Förderrichtung der Rollenbahnen 32 ist geringer als die Erstreckung des Ladeguts 7 in dieser Richtung.

Die genannte Übergabebrücke 43 ist in einem vertikalen Hubgerüst 44 gelagert, das durch stationäre Ständer 57 und einen in diesen gelagerten heb- und senkbaren Gerüstrahmen 46 gebildet ist. Das Heben und Senken der Übergabebrücke 43 erfolgt über Hydraulikzylinder 45, die an dem Rahmen 25 und dem Gerüstrahmen 46 des Hubgerüsts 44 angreifen. Am Gerüstrahmen 46 und der um eine horizontale Achse 47 schwenkbar im Gerüstrahmen 46 gelagerten Übergabebrücke 43 greifen Hydraulikzylinder 48 zum Verschwenken der Übergabebrücke 43 an, so dass die Übergabebrücke 43 bezüglich der Horizontalen nach oben oder unten geneigt werden kann. Das vordere Ende der Übergabebrücke 43 ist mit der Bezugsziffer 49 bezeichnet und ragt in der angedockten Stellung der Flugzeugbeladevorrichtung 24 geringfügig in das Flugzeuginnere, benachbart dem zugewandten Ende der Rollenbahnen 6 des Flugzeugs 2.

Über weitere, nicht näher veranschaulichte Mittel lässt sich eine, Bestandteil der Übergabebrücke 43 bildende Lippe 50 im Sinne des gezeigten Doppelpfeils 51 in Richtung der Rollenbahnen 6 des Flugzeugs 2 ausfahren bzw. in umgekehrter Richtung einfahren. Auch die Übergabebrücke 43 ist mit einer Rollenbahn 52 versehen.

Im Rahmen 25, benachbart dem Fahrgestell 26 ist das Antriebsaggregat 53 für die verfahrbaren Bauteile der Flugzeugbeladevorrichtung 24 gelagert, somit das Antriebsaggregat insbesondere für die Räder 27, die Stützelemente 28, die Hydraulikzylinder 38, 48 und 45 sowie die Antriebseinheiten zum Ausfahren bzw. Neigen der Übergabebrücke 43.

In den Figuren 1 und 2 sind die Ladeplattform 31 und die Übergabebrücke 43 in ihrer maximal angehobenen Stellung veranschaulicht. In diesem Fall dienen sie dem Be- bzw. Entladen von Ladegut im Bereich des oberen Decks eines Flugzeugs des Typs Airbus A380, somit auf einem Niveau größer 8,00 m über dem Boden. In der Figur 1 ist zusätzlich die abgesenkte Stellung von Ladeplattform 31 und Übergabebrücke 43 veranschaulicht. Deren Rollenbahnen 32 und 52 befinden sich auf dem selben Niveau wie die Rollenbahnen 21 der Ladeplattformen 15 und 16. Über dieses Niveau kann der Ladevorgang im Bereich der unteren Ladeebene 3 des Flugzeugs vonstatten gehen.

Die ein- und ausfahrbare Lippe 50 der Übergabebrücke 43 ermöglicht es, diese ohne weiteres zwischen der oberen Ladeebene 4 und der unteren Ladeebene 3 des Flugzeugs 2 zu verfahren. Dies insbesondere unter dem Aspekt, dass sowohl die obere Ladeebene 4 als auch die untere Ladeebene 3 oberhalb bzw. unterhalb desjenigen Wandungsbereiches des Flugzeugs 1 angeordnet sind, der näher zum Hubmast 46 positioniert ist. Diese geometrische Konstellation schließt es aus, dass die Übergabebrücke 43, bei knapp aus dem Flugzeuginneren 10 herausgefahrenem Ende 49, unmittelbar senkrecht von der oberen Ladeebene 4 zur unteren Ladeebene 3 bewegt werden kann. Es ist vielmehr erforderlich, die Lippe 50 weiter einzufahren.

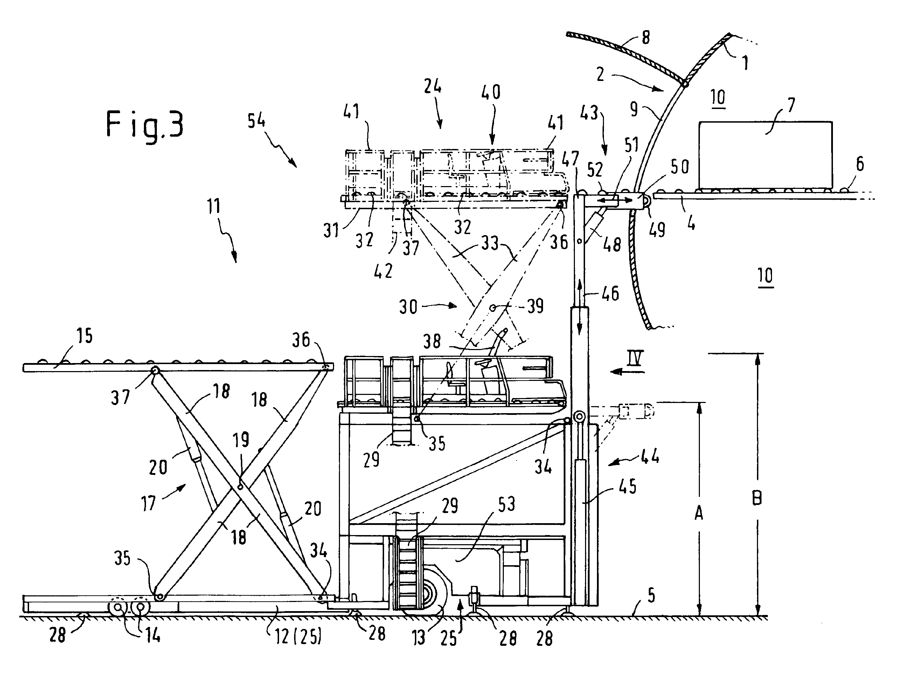

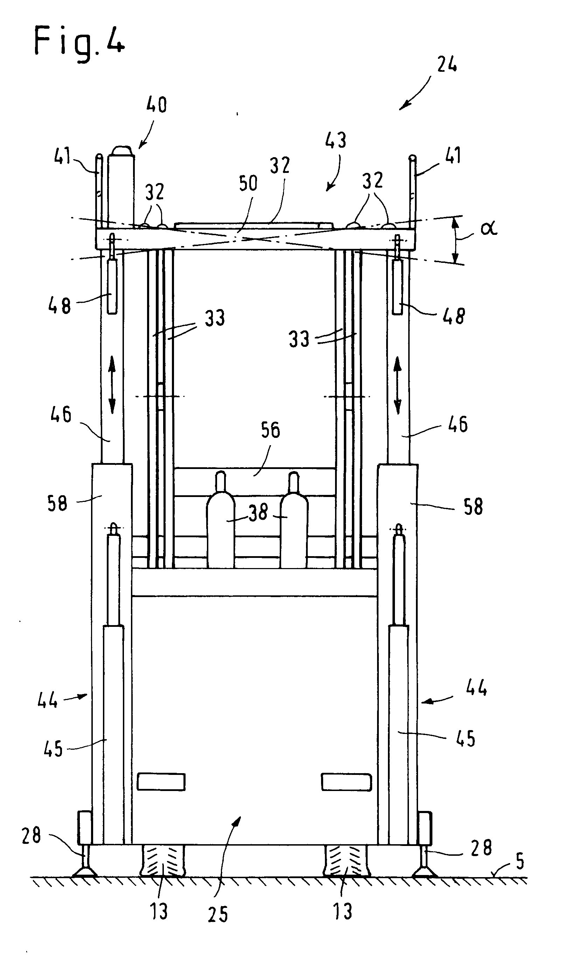

Die Ausführungsform nach den Figuren 3 und 4 unterscheidet sich von derjenigen nach den Figuren 1 und 2 grundsätzlich dadurch, dass die Flugzeugbeladevorrichtungen 11 und 24 in einem gemeinsamen Fahrzeug 54 integriert sind. Bei diesem Fahrzeug ist keine Ladeplattform 16 versehen, sondern es wirkt die Ladeplattform 15 unmittelbar mit der Ladeplattform 31 zusammen. Des Weiteren ist der der Ladeplattform 15 zugeordnete Bereich, der die Hinterräder 14 aufnimmt, unmittelbar mit dem Rahmen 25 verbunden. Dieser ist gegenüber der Ausführungsform nach den Figuren 1 und 2 dahingehend modifiziert, dass er eine lenkbare und antreibbare Vorderachse mit Rädern 13 aufweist.

Für diese, in den Figuren 3 und 4 gezeigte Ausführungsform, sind für in ihrer Funktion gleiche Bauteile, dieselben Bezugsziffern verwendet worden, wie sie zu der Ausführungsform nach den Figuren 1 und 2 genannt sind. Insofern wird auf die vorstehenden Ausführungen betreffend Aufbau und Funktionsweise der Flugzeugbeladevorrichtung verwiesen.

In der Figur 3 ist die Ladeplattform 31 in ihrer maximal angehobenen und maximal abgesenkten Position veranschaulicht, Entsprechendes gilt für die Übergabebrücke 43. In der maximal angehobenen Position erfolgt über die Ladeplattform 31 und die Übergabebrücke 43 die Be- bzw. Entladung von Ladegut 7, das sich auf der oberen Ladeebene 4 eines Airbus A380 befindet. In der untersten Stellung, gemäß der Höhenangabe A in Figur 3, können über die Ladeplattform 31 und die Übergabebrücke 43 Flugzeuge des Typs Airbus A300, A310 DC10 und MD11 sowie eine Version Boeing B747 mit niedriger Ladeebene beund entladen werden. Das gezeigte Niveau der hinteren Ladeplattform 15, entsprechend der Höhenangabe B in Figur 3, veranschaulicht das Ladeniveau eines üblichen Flugzeuges Typ Boeing B747. Wird die Ladeplattform 31 und die Übergabebrücke 43 auf das gezeigte Niveau der Ladeplattform 15 angehoben, kann dieser Flugzeugtyp be- und entladen werden. Das veranschaulichte Niveau der Ladeplattform 15 stellt die maximal angehobene Position dieser Ladeplattform dar. In vorbeschriebener Art und Weise ist bei der Ausführungsform nach den Figuren 3 und 4 das Hubgerüst 44 im Rahmen 25 gelagert und die Übergabebrücke 43 in unterschiedlichen Richtungen längen- und winkelbeweglich gelagert.

Beladen wird das Flugzeug 2 mittels des Ladeguts 7, indem das Ladegut auf die abgesenkte Ladeplattform 15 übernommen wird. Anschließend wird das Ladegut durch Heben der Ladeplattform 15 angehoben. Es erfolgt dann das Überschieben des Ladeguts 7 von der Ladeplattform 15 gegebenenfalls über die Ladeplattform 16 zur Ladeplattform 31. Anschließend wird das Ladegut 7 durch Heben der Ladeplattform 31 angehoben. Schließlich erfolgt das Überschieben des Ladeguts 7 von der Ladeplattform 31 in den Laderaum 10 des Flugzeugs 2. Das Entladen des Flugzeugs erfolgt bei umgekehrten Ablauf.

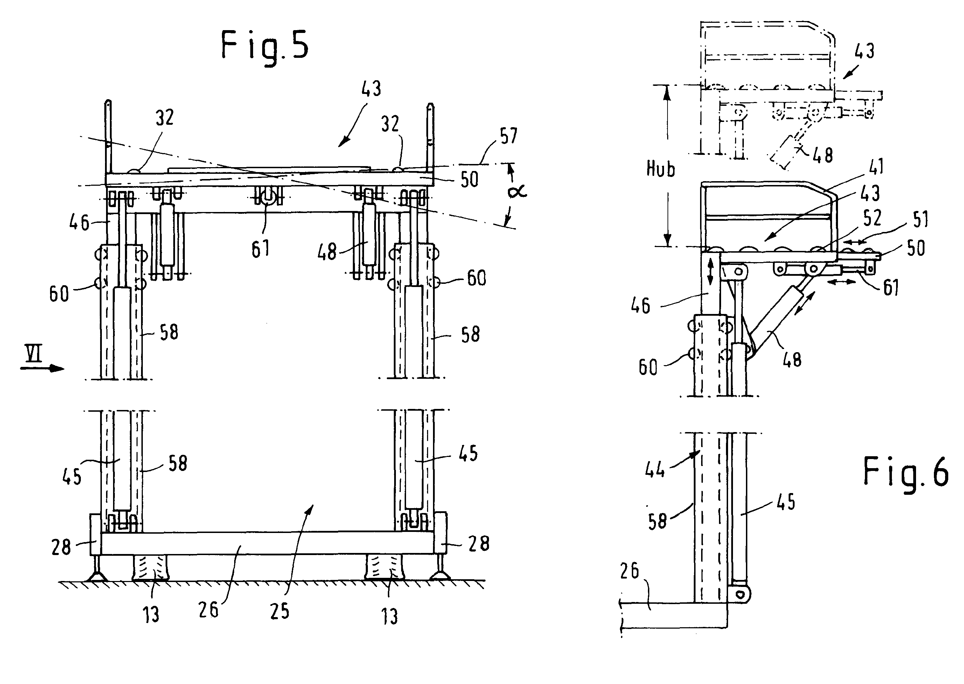

Die Ausführungsform nach den Figuren 5 und 6 veranschaulicht eine gegenüber den Ausführungsformen nach den Figuren 1 bis 4 modifizierte Variante der Flugzeugbeladevorrichtung im Bereich der Übergabebrücke 43. Bei dieser ist die Übergabebrücke 43 relativ zur Horizontalen beidseitig um einen Winkel α nach oben und unten neigbar, wobei dieses "Tilting" durch Verwindung der Übergabebrücke 43 einschließlich der Bestandteil der Übergabebrücke 43 bildenden Lippe 50 erfolgt.

Für die in den Figuren 5 und 6 gezeigte Ausführungsform sind für in ihrer Funktion gleiche Bauteile dieselben Bezugsziffern verwendet worden, wie sie zu den Ausführungsformen nach den Figuren 1 bis 4 genannt sind. Insofern wird auf die vorstehenden Ausführungen betreffend Aufbau und Funktionsweise der Flugzeugbeladevorrichtung verwiesen.

Bei den Ausführungsformen nach den Figuren 5 und 6 wird die Übergabebrücke 43 über zwei Zylinder 45 angehoben, die zwischen dem Rahmen 25 und dem ausfahrbaren Profil 46 des Hubgerüsts 44 angreifen. Das mit dem Fahrgestell 26 verbundene profilierte Teil 58 des Hubgerüstes 44 nimmt den verfahrbaren Abschnitt 46 des Hubgerüstes 44 geführt auf, wobei diese Führung mittels Rollen 60 erfolgt. Das Schwenken - Tilting - der Übergabebrücke 43 um den Winkel α in der in Figur 5 gezeigten Richtung bzw. auch in der Gegenrichtung um diesen Winkel erfolgt durch entgegengesetzte Beaufschlagung der doppelwirkenden Zylinder 48. Mittels eines doppelwirkenden Zylinders 61 lässt sich die, Bestandteil der Übergabebrücke 43 bildende Lippe 50 im Sinne des gezeigten Doppelpfeils 51 in Richtung der Rollenbahnen 6 des Flugzeugs 2 ausfahren bzw. in umgekehrter Richtung einfahren.

## Patentansprüche

1. Flugzeugbeladevorrichtung (24) mit mindestens einer heb- und senkbaren Ladeplattform (31) zur Aufnahme des zu be- bzw. entladenden Gutes (7) mit Mitteln (38) zum Heben und Senken der Ladeplattform (31), wobei die Ladeplattform (31) in eine Position verfahrbar ist, in der die obere Fläche der Ladeplattform (31) eine Ebene mit der Ladeebene (4) des Flugzeuges (2) bildet, **gekennzeichnet durch** eine Übergabebrücke (43) zur Übergabe des Gutes (7) von der Ladeplattform (31) in das Flugzeug (2) und umgekehrt, wobei die Übergabebrücke (43) in einem vertikal angeordneten, teleskopierbaren Hubgerüst (44) gelagert ist, sowie mit Mitteln (45) zum Aus- und Einfahren des Hubgerüsts (44).

2. Vorrichtung nach Anspruch 1, **dadurch gekennzeichnet, dass** das Hubgerüst (44) benachbart der Ladeplattform (31) angeordnet ist, und die Übergabebrücke (43) im Bereich ihres der Ladeplattform (31) zugewandten Endes aufnimmt.

3. Vorrichtung nach Anspruch 1 oder 2, **dadurch gekennzeichnet, dass** das Hubgerüst (44) sich in Breitenrichtung der Flugzeugbeladevorrichtung erstreckt.

4. Vorrichtung nach Anspruch 3, **dadurch gekennzeichnet, dass** das Hubgerüst (44) seitliche stationäre Ständer (57) aufweist, in denen ein vertikal verfahrbarer Gerüstrahmen (46) gelagert ist, der die Übergabebrücke (43) aufnimmt.

5. Vorrichtung nach einem der Ansprüche 1 bis 4, **dadurch gekennzeichnet, dass** die Mittel zum Aus- und Einfahren des Hubgerüsts (44) als Teleskopzylinder, insbesondere Hydraulikzylinder (45) ausgebildet sind.

6. Vorrichtung nach einem der Ansprüche 1 bis 5, **dadurch gekennzeichnet, dass** die Übergabebrücke (43) im Bereich ihres der Ladeplattform (31) abgewandten Endes eine mittels Kraftmitteln horizontal ein- und ausfahrbare Überfahrlippe (50) aufweist.

7. Vorrichtung nach einem der Ansprüche 1 bis 6, **dadurch gekennzeichnet, dass** die Übergabebrücke (43) mittels Kraftmitteln (61; 48) aus der Horizontalen zur Seite neigbar und/oder aus der Horizontalen nach vorne unten oder vorne oben neigbar ist.

8. Vorrichtung nach einem der Ansprüche 1 bis 7, **dadurch gekennzeichnet, dass** der Abstand der Übergabebrücke (43) vom Boden (5), auf dem die Flugzeugbeladevorrichtung (24) aufsteht, bei maximal abgesenkter Übergabebrücke (43), 30 bis 60 % desjenigen bei maximal angehobener Übergabebrücke (43), insbesondere etwa 50 % beträgt.

9. Verwendung einer Flugzeugbeladevorrichtung (24), die entsprechend den Merkmalen nach einem der Ansprüche 1 bis 8 ausgebildet ist, zum Beund Entladen eines Flugzeuges (2), das zumindest zwei auf unterschiedlichen Niveaus angeordnete Ladeebenen (3, 4) aufweist.

10. Verwendung einer Flugzeugbeladevorrichtung (24), die entsprechend den Merkmalen nach einem der Ansprüche 1 bis 8 ausgebildet ist, zum Beund Entladen eines Flugzeuges (2), das eine obere Ladeebene (4) auf einer Höhe über dem Boden (5) von mehr als 8 m und eine mindestens 2 m unter dieser oberen Ladeebene (4) angeordnete untere Ladeebene (3) aufweist.

11. Verwendung einer Flugzeugbeladevorrichtung (24), die entsprechend den Merkmalen nach einem der Ansprüche 1 bis 8 ausgebildet ist, zum Beund Entladen eines Flugzeuges (2), wobei die obere Ladeebene (4) oberhalb der, horizontal gemessen, maximalen Rumpfdicke des Flugzeuges (2), und die untere Ladeebene (3) unterhalb dieser maximalen Rumpfdicke angeordnet ist.
